# EUROPÄISCHE PATENTSCHRIFT

(11) **EP 0 816 136 B1**
(45) Veröffentlichungstag und Bekanntmachung des Hinweises auf die Patenterteilung: **12.12.2001**
(21) Anmeldenummer: 97109926.2
(22) Anmeldetag: 18.06.1997
(51) Int. Cl.: B60C 23/04

(54) **Befestigungsvorrichtung für ein Elektronikmodul**
Fastening device for an electronic module
Dispositif de fixation d'un module électronique

(30) Priorität: 01.07.1996 DE 19626145
(43) Veröffentlichungstag der Anmeldung: 07.01.1998
(73) Patentinhaber: Continental Aktiengesellschaft, 30165 Hannover (DE)
(72) Erfinder: Albinski, Christian, 30926 Seelze (DE)

(56) Entgegenhaltungen:
- EP-A- 0 289 883
- EP-A- 0 346 679
- EP-A- 0 431 217
- EP-A- 0 751 017
- WO-A-89/10852
- FR-A- 2 661 373
- US-A- 4 196 414

## Beschreibung

Gegenstand der Erfindung ist eine Vorrichtung zum lösbaren Befestigen eines Elektronikmoduls an ein luftbereiftes Fahrzeugrad mittels eines Federelements.

Zur Übertragung von Meßdaten, insbesondere zur Übertragung von Luftdruck und/oder Temperatur, von den Rädern eines Fahrzeugs an eine fahrzeugfeste zentrale Auswerteeinrichtung ist es erforderlich, ein Elektronikmodul im Innern der Luftkammer des Fahrzeugrades anzubringen. Die Plazierung sollte so konzipiert sein, daß weder die bei schneller Fahrt auftretenden, extrem großen Fliehkräfte noch die mit einem Reifenwechsel erforderlichen Montagearbeiten eine Beschädigung hervorrufen können.

Ein starres Verschrauben des Moduls mit dem Ventilkörper oder ein Verschrauben des Moduls mit dem Ventil über eine Kugelpassung wird den Anforderungen nicht ausreichend gerecht.

Zur Befestigung von Elektronikbausteinen sind im Tiefbett einer Felge anbringbare Spannbänder bekannt. Wegen der unterschiedlichen Wärmeausdehnungskoeffizienten von Felge und Spannband sind zwischen Spannband und Felge elastische Federelemente zwischenzuschalten, Obwohl theoretisch davon ausgegangen werden kann, daß die Festigkeit des Sitzes durch die Wahl der Vorspannung beherrschbar ist, sind Beeinträchtigungen der Festigkeit bei derartigen Federelementen nicht völlig auszuschließen.
Bei der Dimensionierung des Spannbandes muß auf das jeweilige Format und die Größe der Felge Rücksicht genommen werden.

Weitere Nachteile derartiger Spannbänder ergeben sich aus einem ungünstigen Krafteck: Durch Einleiten der Fliehkraft wird die Zugkraft im Spannband sehr groß. Auch wird durch die konische Gestalt des Tiefbettgrundes mancher Felgentypen eine gleichmäßige Krafteinleitung in das Spannband kompliziert.

Aus der FR-A-2 661 373 ist eine Vorrichtung bekannt, die dem Oberbegriff des Anspruchs 1 entspricht.

Die Aufgabe der Erfindung besteht darin, ein universelles Befestigungsmittel zur Integration eines Elektronikmoduls in das System Rad zu schaffen.

Bei einer Vorrichtung zum lösbaren Befestigen eines Elektronikmoduls an der Felge eines luftbereiften Fahrzeugrades wird diese Aufgabe mittels eines Federelements gelöst, wobei das Elektronikmodul zwischen dem freien Ende (Einspannflügel) des Federelements und der Felge des Fahrzeugrades fest einklemmbar ist.

Solch ein Federelement weist einen geringen Bauraum auf und ist an Felgen unterschiedlichsten Typs und Größe universell anbringbar.

Aufgrund des kompakten Baumaßes ist die Unwuchtmasse des Federelements fast vernachlässigbar gering. Prinzipbedingt kann die erforderliche Gesamtmasse gegenüber anderen bekannten Systemen deutlich reduziert werden.
Wegen des einfachen Aufbaus läßt sich das Federelement kostengünstig in Großserie herstellen.

Entsprechend einer bevorzugten Ausführungsform ist das erfindungsgemäße Federelement an dem dem Reifeninnenraum zugewandten Ende eines Ventilkörpers angebracht. Auf diese Weise kann auf z. B. einen besonderen Niet oder Schraube zur Befestigung des Federelements verzichtet werden.

Um einen festen Sitz des Elektronikmoduls zu gewährleisten, ist die Berührungsfläche des Federelements so profiliert, daß das Profil des Federelements einen Abdruck des entsprechend profilierten Elektronikmoduls darstellt. Damit ist der Formschluß zur Aufnahme von Kräften in der y-z-Ebene gewährleistet. Hierdurch ist nicht nur ein besonders fester Sitz sondern auch eine genaue, vorbestimmte Position des Elektronikmoduls gegeben.

Durch einen zwischen Felge und Feder anbringbaren Anschlagring wird die Dichtung entlastet. Gleichzeitig wird ein Zerdrücken der Dichtung bei der Montage verhindert und die richtige Position des Moduls gewährleistet.

Die Feder weist vorzugsweise eine progressive oder zweistufige Kennlinie auf. Erfindungsgemäß kann dies durch Auftrennen des freien Federendes realisiert werden. Dabei erzeugt der äußere Teil des freien Federendes die erforderliche Vorspannkraft und der innere Teil, der eine deutlich höhere Biegesteifigkeit aufweist, wirkt als Federwegbegrenzung.

Nachfolgend wird die erfindungsgemäße Befestigungsvorrichtung anhand der beigefügten Zeichnungen näher beschrieben.

Die Abbildung 1 zeigt eine schematische Darstellung eines solchen Federelements (Fig. 1a: Längsschnitt; Fig. 1b ; Draufsicht).

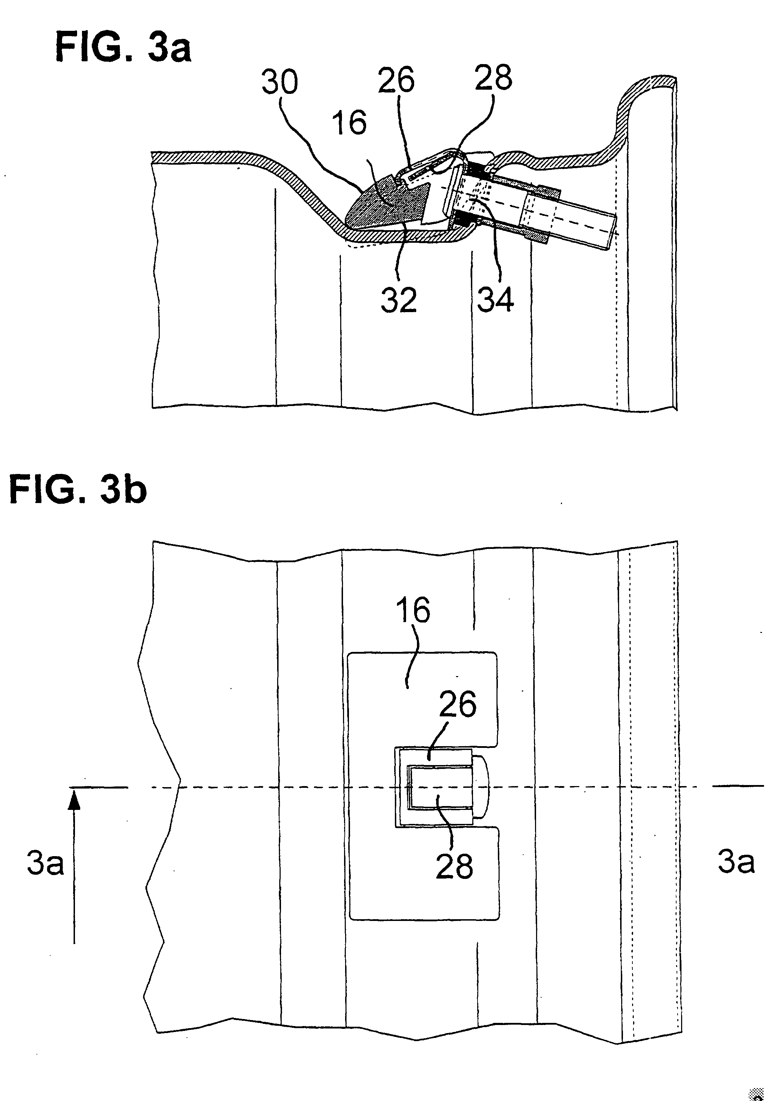

In den Abbildungen 2 und 3 sind bevorzugte Weiterbildungen der Erfindung dargestellt (Fig. 2a, 3a: jeweils Längsschnitt; Fig. 2b, 3b: jeweils Draufsicht).
Anhand der Abbildung 4 soll die Funktionsweise erläutert. werden.

Das Federelement 2 besteht aus einer Dichtung 4 und einem Einspannflügel 6. Die Dichtung 4 des Federelements 2 ist an dem dem Reifeninnenraum 8 zugewandten Ende 14 eines Ventilkörpers 12 befestigt. Das Ventil 12 ist wiederum an der Felge 10 des Fahrzeugrades angebracht.
Der freie Einspannflügel 6 des Federelements 2 bildet zusammen mit der Wandung der Felge des Fahrzeugs eine Halteklaue, in die das zu befestigende Elektronikmodul 16 einspannbar ist.

Die Gehäuseoberfläche des Elektronikmoduls 16 weist eine Profilierung 20 auf. In entsprechender Weise ist die Innenseite des freien Einspannflügels 6 des Federelements 2 profiliert 18.

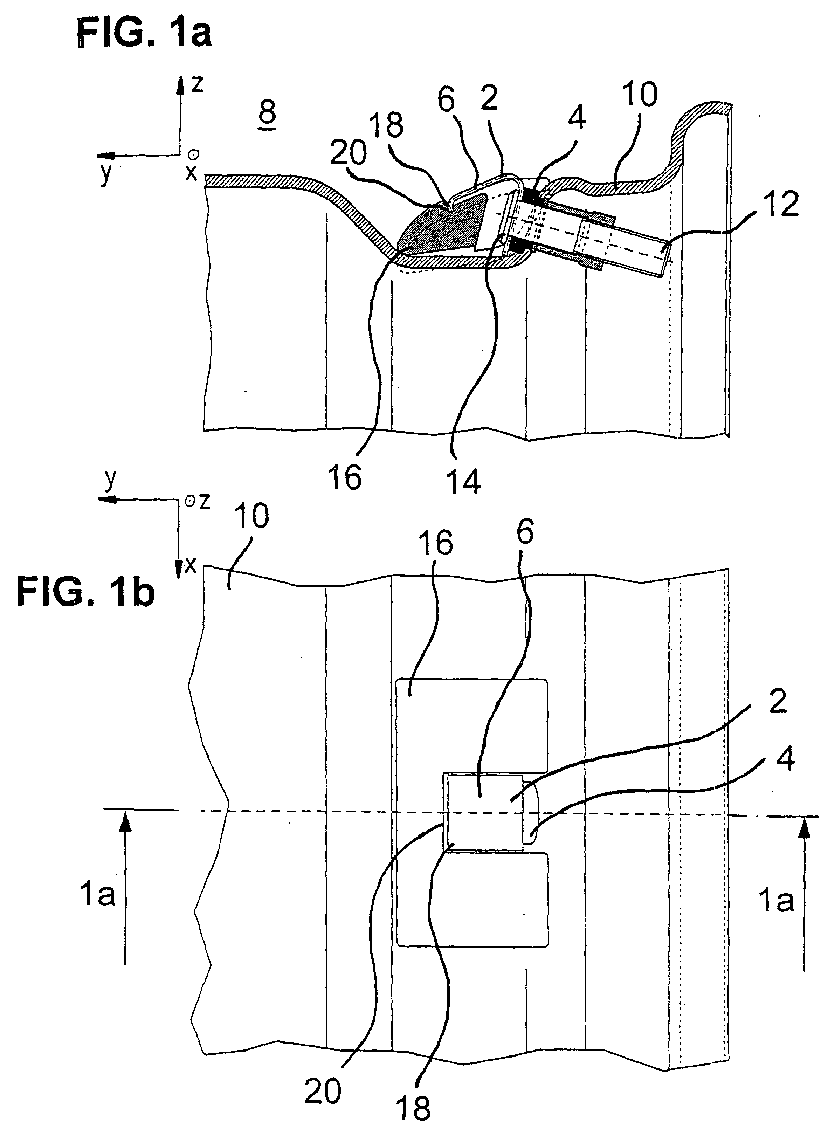

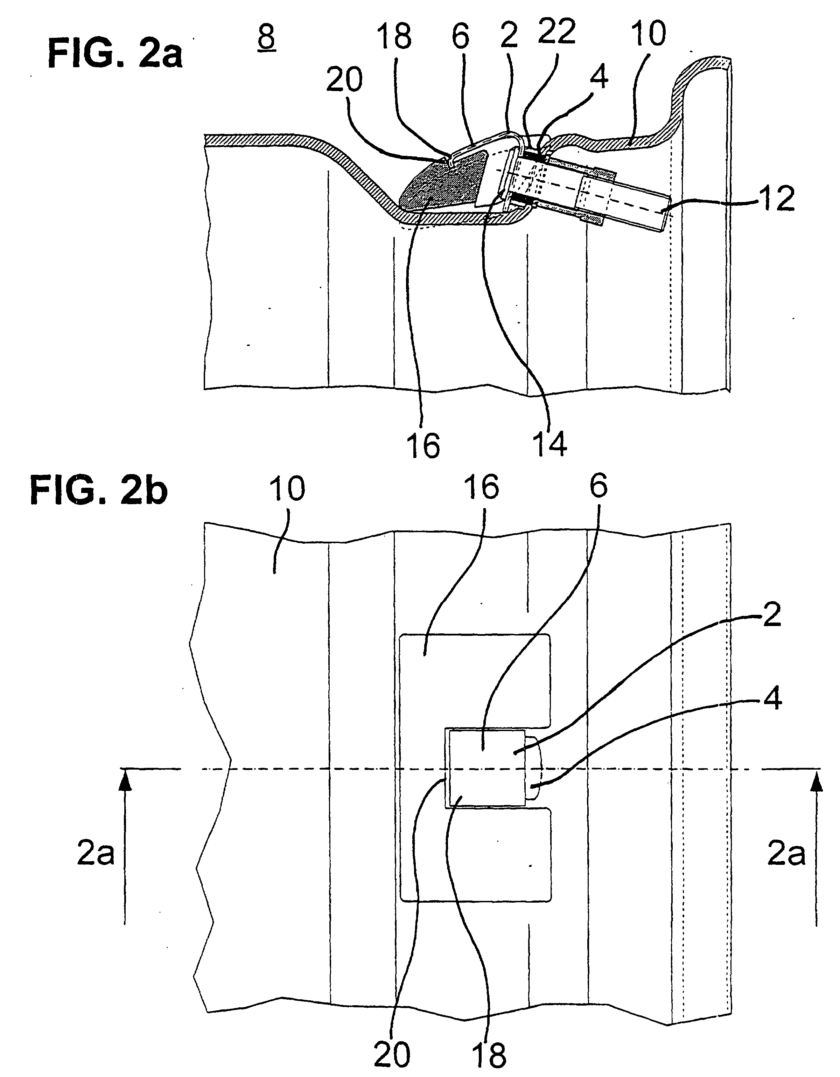

Die Abbildung 2 unterscheidet sich von der Abbildung 1 insbesondere durch die Verwendung eines Anschlagringes 22. Der Zweck dieses Anschlagringes 22 besteht darin, die Dichtung 4 des Ventilsitzes zu entlasten, ein Zerdrücken der Dichtung 4 bei der Montage zu verhindern und die richtige Position des Moduls 16 zu gewährleisten. Dabei ist anzumerken, daß sich die Position des Moduls 16 mit dem Abstand zwischen Feder 2 und Tiefbettflanke ändert.

Bei der Fig, 3 wird besonderes Augenmerk auf eine zweistufige Ausbildung des Federelements 2 gerichtet.

Diese Zweistufigkeit wird durch Trennen des freien Endes 6 der Feder 2 erreicht, Dabei erzeugt der äußere Teil 26 des freien Federendes 6 die Vorspannkraft, positioniert das Modul 16 im Tiefbett und nimmt einen Teil der Fliehkraft, bzw. deren Reaktionskräfte auf, Der innere Teil 28 erhält eine deutlich höhere Biegesteifigkeit als der äußere Teil 26 und eine eigene Anlagefläche am Modul 16. Der innere Teil 28 wirkt als Federwegbegrenzung des äußeren Teils 26 während des Wirkens großer und durch den äußeren Teil 26 nicht aufnehmbarer Fliehkräfte.

Das auf die Befestigungsfeder 2 in Form und Größe abgestimmte Elektronikmodul 16 weist näherungsweise einen dreieckigen Querschnitt auf. Die Oberseite 30 ist leicht nach oben gewölbt, wodurch sich ein hinreichend großes Volumen ergibt. Die Unterseite hat zwei verschiedene Schenkel 32, 34. Auf diese Weise ergibt sich ein tiefer Schwerpunkt unterhalb der Verbindungslinie der Auflagepunkte. Die in der Oberseite 30 befindliche Aussparung entspricht der Größe des freien Endes 6 der Befestigungsfeder 2, wodurch sich insgesamt ein paßgenauer Halt ergibt.

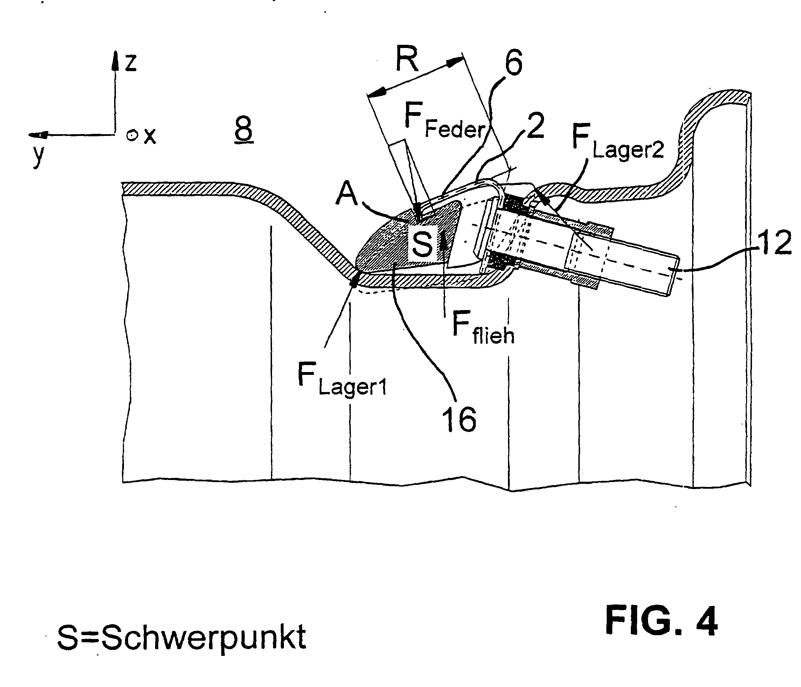

Anschließend wird die Montage und die Funktionsweise anhand der Abbildung 4 kurz beschrieben,

Die Feder 2 wird mit Hilfe einer dafür vorgesehenen Bohrung, vorzugsweise mit dem Ventil 12 verschraubt.

Das freie Federende 6 ist so ausgebildet, daß sich das Elektronikmodul 16 an dieser Stelle um die ×-Achse, relativ zur Feder 2 frei drehen (Drehachse A) und aus der y-z-Ebene Kommende Kräfte, vorzugsweise durch Formschluß aufnehmen kann.

Aufgrund der Elastizität der Feder 2 kann sich in Abhängigkeit der wirkenden Kräfte die Position der Drehachse A, näherungsweise auf einer Kreisbahn mit dem Radius R bewegen. Dabei ist anzumerken, daß der Radius R in Abhängigkeit der Tiefbettgeometrie und der Ausgestaltung der Bohrung zur Ventilbefestigung einen wesentlichen Einfluß auf die Lage des Elektronikmoduls 16 hat.

Der Schwerpunkt des Elektronikmoduls 16 liegt vorzugsweise in y-Richtung zwischen der Drehachse A und dem dem Reifeninnenraum 8 zugewandten Ende des Ventils 12, um ein "Unterweggleiten" des Moduls 16 zu verhindern.

Bei dieser Anordnung des Schwerpunktes verhalten sich die Kräfte bei steigender Kreisfrequenz des Rades wie folgt. Die Fliehkraft F_{flien} steigt und als Reaktion auch die Federkraft F_{feder} und die Auflagerkraft F_{lager1}, während die Auflagerkraft F_{lager2} abnimmt.
Es folgt daraus, daß bei bekannter Elektronikmodulmase und maximaler Kreisfrequenz eine Bewegung des Moduls 16 durch die Auslegung der Feder 2 verhindert oder kontrolliert werden kann.

### Bezugszeichenliste

- 2: Federelement
- 4: Dichtung
- 6: Einspannflügel des Federelements
- 8: Reifeninnenraum der Felge
- 10: Felge
- 12: Ventilkörper
- 14: dem Reifeninnenraum zugewandtes Ende des Ventilkörpers
- 16: Elektronikmodul
- 18: Profilierung am freien Ende (Einspannflügel) des Federelements
- 20: Profilierung (im Gehäuse) des Elektronikmoduls
- 22: Anschlagring (Distanzring)
- 26: äußerer Teil des Federendes
- 28: inneres Teil des Federendes
- 30: Oberseite des Elektronikmoduls
- 32,34: ungleichlange Schenkel der Unterseite des Elektronikmoduls

## Patentansprüche

1. Vorrichtung zum lösbaren Befestigen eines Elektronikmoduls (16) an der Felge (10) eines luftbereiftes Fahrzeugrades mittels eines Federelements (2), **dadurch gekennzeichnet, dass** das Elektronikmodul (16) zwischen dem freien Ende (6) des Federelements (2) und der Felge (10) des Fahrzeugrades einklemmbar ist.

2. Vorrichtung nach Anspruch 1,
**dadurch gekennzeichnet,**
**daß** das Federelement (2) an dem dem Reifeninnenraum (8) zugewandten Ende (14) eines Ventilkörpers (12) angebracht ist.

3. Vorrichtung nach Anspruch 1 oder 2,
**dadurch gekennzeichnet,**
**daß** die Kontaktfläche des freien Endes (6) des Federelements (2) profiliert ist, wobei diese Profilierung (18) mit einer entsprechenden Profilierung (20) des zu befestigenden Elektronikmoduls (16) korrespondiert.

4. Vorrichtung nach einem der Ansprüche 1 - 3,
**gekennzeichnet durch:**
einen Anschlagring (22) zur Entlastung der Dichtung (4),

5. Vorrichtung nach einem der Ansprüche 1 - 4,
**dadurch gekennzeichnet,**
**daß** das freie Ende (6) der Feder (2) längsgeteilt ist,
wobei der äußere Teil (26) des Federendes (6) eine Vorspannkraft erzeugt, das Modul (16) im Tiefbett positioniert und einen Teil der Fliehkraft bzw, deren Reaktionskraft aufnimmt,
während der innere Teil (28) eine deutlich höhere Biegesteifigkeit als der außere Teil (26) und eine eigene Auflagefläche am Modul (16) aufweist
und als Federwegbegrenzung des äuBeren Teils (26) während des Wirkens großer und durch den äuBeren Teil (26) nicht aufnehmbarer Fliehkräfte wirkt.

6. Vorrichtung nach einem der vorhergehenden Ansprüche,
**dadurch gekennzeichnet,**
**daß** das Elektronikmodul (16) näherungsweise einen dreieckigen Querschnitt aufweist,
wobei die obere Seite (30) nach oben gewölbt ist, und
wobei die untere Seite zwei verschiedenlange Schenkel (32), (34) aufweist,
wodurch sich insgesamt ein tiefer Schwerpunkt S unterhalb der Verbindungslinie der Auflagerpunkte F_{lager1} und F_{lager2} ergibt.

## Claims

1. Apparatus for the detachable mounting of an electronic unit (16) to the rim (10) of a vehicle wheel, fitted with a pneumatic tyre, by means of a resilient member (2), **characterised in that** the electronic unit (16) is clampable in position between the free end (6) of the resilient member (2) and the rim (10) of the vehicle wheel.

2. Apparatus according to claim 1, **characterised in that** the resilient member (2) is attached to the end (14) of a valve body (12) facing the tyre interior (8).

3. Apparatus according to claim 1 or 2, **characterised in that** the contact face of the free end (6) of the resilient member (2) is profiled, this profiling corresponding to a corresponding profiling (20) of the electronic unit (16) to be secured.

4. Apparatus according to one of claims 1 - 3, **characterised by** a stop ring (22) for relieving the pressure on the seal (4).

5. Apparatus according to one of claims 1 - 4, **characterised in that** the free end (6) of the spring (2) is divided longitudinally, the external portion (26) of the spring end (6) producing an initial tensioning force, the unit (16) is positioned in the well base and absorbs some of the centrifugal force, or respectively the reaction force thereof, while the internal portion (28) has a clearly higher bending resistance than the external portion (26) and its own supporting face on the unit (16) and acts as a means for defining the resilient movement of the external portion (26) during the action of large centrifugal forces which cannot be absorbed by the external portion (26).

6. Apparatus according to one of the preceding claims, **characterised in that** the electronic unit (16) has approximately a triangular cross-section, the upper side (30) being curved upwardly, and the lower side having two portions (32, 34) of different length, whereby a low centre of gravity S is produced generally beneath the line connecting the supporting points Fₛᵤₚₚₒᵣₜ₁ and Fₛᵤₚₚₒᵣₜ₂.

## Revendications

1. Dispositif pour fixer de façon amovible un module électronique (16) sur la jante (10) d'une roue de véhicule équipée d'un pneumatique, au moyen d'un élément de ressort (2), **caractérisé en ce que** le module électronique (16) peut être serré entre l'extrémité libre (6) de l'élément de ressort (2) et la jante (10) de la roue du véhicule.

2. Dispositif selon la revendication 1, **caractérisé en ce que** l'élément de ressort (2) est monté sur l'extrémité (14), tournée vers l'espace intérieur (8) du pneumatique, d'un corps de valve (12).

3. Dispositif selon la revendication 1 ou 2, **caractérisé en ce que** la surface de contact de l'extrémité libre (6) de l'élément de ressort (2) est profilée, ce profil (18) correspondant à un profil correspondant (20) du module électronique (16) devant être fixé.

4. Dispositif selon l'une des revendications 1-3, **caractérisé par**
une bague de butée (22) pour décharger la garniture d'étanchéité (4).

5. Dispositif selon l'une des revendications 1-4, **caractérisé en ce**
**que** l'extrémité libre (6) du ressort (2) est divisée longitudinalement, la partie extérieure (26) de l'extrémité (6) du ressort produisant une force de précontrainte, positionnant le module (16) dans la base creuse et absorbant une partie de la force centrifuge ou de la force de réaction à cette force,
tandis que la partie intérieure (28) possède une résistance à la flexion nettement plus élevée que la partie extérieure (26) et une surface propre d'application sur le module (16), et
agit en tant que limitation de la course élastique de la partie extérieure (26) pendant l'action de forces centrifuges plus intenses et qui ne peuvent pas être absorbées par la partie extérieure (26).

6. Dispositif selon l'une des revendications précédentes, **caractérisé en ce**
**que** le module électronique (16) possède approximativement une section transversale triangulaire,
le côté supérieur (30) étant cintré vers le haut et
le côté inférieur comportant deux branches (32), (34) ayant des longueurs différentes,
ce qui a pour effet que l'on obtient globalement un centre de gravité S plus bas, situé au-dessous de la droite reliant les points d'application Fₐₚₚᵤᵢ₁ et Fₐₚₚᵤᵢ₂.
